# EUROPEAN PATENT SPECIFICATION

(11) **EP 4 431 763 B1**
(45) Date of publication and mention of the grant of the patent: **18.02.2026**
(21) Application number: 24164303.0
(22) Date of filing: 18.03.2024
(51) Int. Cl.: F16H 57/027, F16H 57/04

(54) **DRIVELINE ASSEMBLY FOR A WORK VEHICLE AND WORK VEHICLE COMPRISING THE SAME**
ANTRIEBSSTRANGANORDNUNG FÜR EIN ARBEITSFAHRZEUG UND ARBEITSFAHRZEUG DAMIT
ENSEMBLE CHAÎNE CINÉMATIQUE POUR UN VÉHICULE DE TRAVAIL ET VÉHICULE DE TRAVAIL LE COMPRENANT

(30) Priority: 16.03.2023 IT 202300005019
(43) Date of publication of application: 18.09.2024
(73) Proprietor: CNH Industrial Italia S.p.A., 10156 Torino (IT)
(72) Inventor: LUCENTE, Aldo, 10156 Turin (IT); CHAVES, Rafael, 10156 Turin (IT); TERZI, Stefano, 10156 Turin (IT); TONELLI, Andrea, 10156 Turin (IT)
(74) Representative: CNH Industrial IP Department

(56) References cited:
- EP-A1- 0 479 081
- DE-A1- 102018 211 360
- JP-A- 2003 166 630
- US-A- 3 800 913
- US-A1- 2002 053 489

## Description

### TECHNICAL FIELD

The present invention concerns a work vehicle comprising a driveline assembly.

### BACKGROUND OF THE INVENTION

Work vehicles are known comprising a main body, a locomotion system including wheels or tracks for moving the main body with respect to the ground, a propulsion system including a thermal engine and/or an electric motor, and a driveline, which operatively connects the locomotion system to the propulsion system.

In general, the drivelines comprise a plurality of mechanical components (e.g., gears and bearings), which are lubricated to reduce friction and wear between their contact surfaces. By way of example, the drivelines are lubricated by oil splashing, i.e., by splashing caused by the movement of the mechanical components.

For this purpose, the work vehicle comprises an oil sump, which contains oil in which the mechanical components are partially immersed, and which is adapted to collect the oil that falls due to gravity after lubricating the mechanical components.

Example are shown in JP2003166630A, EP0479081A1, US3800913A and US2002/053489.

Document JP2003166630A discloses a work vehicle with locomotions means and motor means, a driveline comprising a plurality of mechanical components adapted to operatively connect, in use, motor means of said work vehicle to locomotion means of said work vehicle, an oil sump adapted to collect an oil lubricating, in use, in said driveline, an oil reservoir adapted to contain said oil, wherein said oil reservoir and said oil sump are integral and adjacent to each other, and fluidly connected to each other, an implement, a pump, a duct and a valve, a second stretch from the valve to the oil reservoir and a third stretch to the oil sump.

However, the capacity of oil of the drivelines is limited by the fact that as the amount of oil increases, the power losses increase, as a consequence of the fact that the oil level in the oil sump rises and the portion of the mechanical components immersed in the oil increases.

The work vehicles are known to further comprise at least one hydraulically operated implement and a relative hydraulic circuit for the actuation of the implement.

In detail, the circuit comprises the oil sump, the hydraulically operated implement, a pump and a remote valve. The oil pump is adapted to suck oil from the oil sump and to deliver it to the remote valve. The oil flowing through the remote valve is then used to actuate the implement and is discharged into the oil sump. In other words, the oil contained in the oil sump is adapted both to lubricate the mechanical components of the driveline and to actuate the implement(s).

However, the flow of oil arriving in the oil sump from the remote valve is characterized by high velocity and tends to cause turbulence of the oil contained therein, consequently affecting lubrication quality.

The quality of lubrication is further reduced by aeration of the oil caused by splashing and high velocity of the flow coming from the remove valve.

Therefore, there is a need within the industry for a driveline assembly for a work vehicle allowing the quality of lubrication of the mechanical components of the driveline to be improved.

### SUMMARY OF THE INVENTION

The aforementioned aim is reached by a work vehicle, as claimed in the appended independent claim.

Preferred embodiments of the invention are realized according to the claims dependent or related to the above independent claim.

### BRIEF DESCRIPTION OF DRAWINGS

For a better understanding of the present invention, it is made reference to the attached drawing wherein:
- Figure 1 is a schematic representation of a work vehicle comprising a driveline assembly not according to the present invention; and
- Figure 2 is a schematic representation of a portion of the driveline assembly of Figure 1;
- Figure 3 is a schematic representation of a work vehicle comprising a driveline assembly according to an embodiment of the present invention; and
- Figure 4 is a schematic representation of a portion of the driveline assembly of Figure 3.

### DETAILED DESCRIPTION

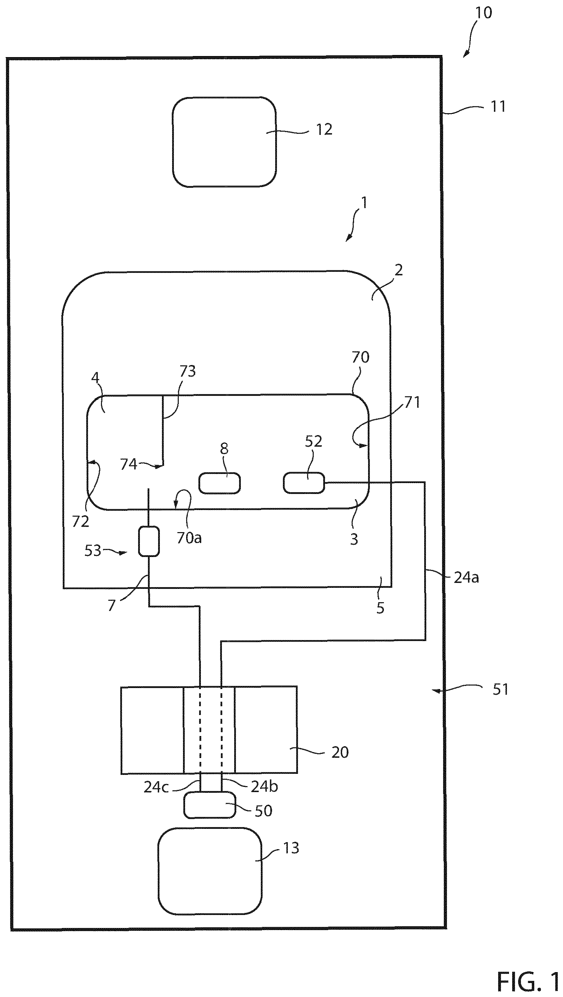

With reference to figure 1, numeral 10 indicates a work vehicle, in particular an agricultural vehicle such as a tractor.

Work vehicle 10 comprises a main body 11, a plurality of wheels 12, which are rotatable relative to main body 11 about respective rotational axes and motor means 13 (e.g., a thermal engine and/or an electric motor) adapted to rotate wheels 12 about their respective rotational axes.

Work vehicle 10 further comprises a driveline assembly 1. Driveline assembly 1 comprises, in turn, a driveline 2 adapted to operatively connect motor means 13 to wheels 12 and an oil sump 3 for collecting by gravity an oil adapted to lubricate driveline 2.

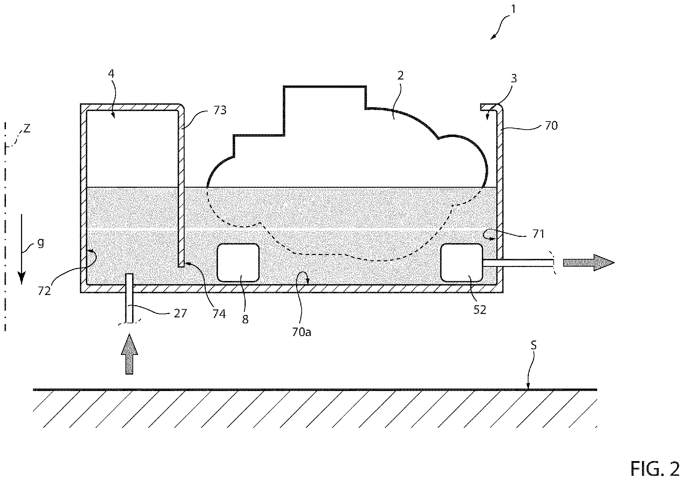

Driveline 2 comprises a plurality of mechanical components - which are known per se and not shown - adapted to transmit motion from motor means 13 to wheels 12. By way of example, driveline 2 comprises a plurality of wheels and bearings. In further detail, at least some of the mechanical components are at least partially immersed in the oil contained in oil sump 3 (Figure 2).

Advantageously, driveline assembly 1 comprises an oil reservoir 4 fluidly connected to oil sump 3; in addition, oil reservoir 4 and oil sump 3 are integral and adjacent to each other. Oil reservoir 4 is adapted to contain oil, specifically the same oil contained in oil sump 3.

As shown in Figure 2, oil reservoir 4 is arranged in such a manner that the mechanical components of driveline 2 are spaced away from the oil volume contained in oil reservoir 4. In other words, the mechanical components of driveline 2 are not immersed in the oil contained in oil reservoir 4.

In addition, preferably, oil reservoir 4 is spaced away from a projection of the mechanical components of driveline 2 onto a plane perpendicular to acceleration vector g. As a result, unlike oil sump 3, oil reservoir 4 is not adapted to directly collect the oil falling by gravity from the mechanical components of driveline 2 (Figure 2).

In the preferred embodiment shown, driveline assembly 1 comprises a body 70. Body 70 comprises, in turn, a volume 71, a volume 72 and a septum 73 adapted to delimit volume 71 from volume 72. Volume 71 comprises and/or defines oil sump 3 and volume 72 comprises and/or defines oil reservoir 4. In other words, oil sump 3 and oil reservoir 4 are two compartments of body 70.

In detail, septum 73 comprises an opening 74, which fluidly connects volume 71 with volume 72.

Body 70 comprises a basement wall 70a, which is transversal to septum 73 and constitutes the portion of body 70 closest to the ground S on which wheels 12 rest. In greater detail, septum 73 is spaced from basement wall 70a along a vertical direction Z parallel to acceleration vector g and opening 74 is defined by the orifice between septum 73 and basement wall 70a along vertical direction Z (Figure 2). Alternatively, opening 74 is spaced from basement wall 70a along vertical direction Z.

Driveline assembly 1 also comprises a container 5 enclosing at least in part driveline 2. In addition, container 5 comprises body 70 or is defined at least in part by body 70. Preferably but not necessarily, body 70 constitutes the lowermost portion of container 5 according to vertical direction Z, i.e., the portion of container 5 closest to the ground S.

Work vehicle 1 further comprises at least one implement 50, which is hydraulically operated and an actuation circuit 51 for the actuation of implement 50. By way of example, implement 50 is a front end loader.

The actuation circuit 51 comprises, in turn, a pump 52 adapted to suck oil from oil sump 3, a remote valve 20 fluidly connected to pump 52, implement 50 fluidly connected to remote valve 20 and a duct 7 fluidly connecting remote valve 20 to driveline assembly 1 (Figure 1).

In detail, duct 7 directly fluidly connects remote valve 20 to oil reservoir 4.

Pump 52 is adapted to deliver the oil sucked from oil sump 3 to remote valve 20.

As schematized in Figure 1, actuation circuit 51 further comprises in succession a stretch 24a fluidly connecting pump 52 to remote valve 20, a stretch 24b fluidly connecting remote valve 20 to implement 50 and a stretch 24c fluidly connecting implement 50 to remote valve 20.

Preferably, actuation circuit 51 comprises deaeration means 53 adapted to remove oxygen and other dissolved gases from the oil flowing through it. In detail, actuation circuit 51 comprises a deaerator 54 at duct 7.

Preferably but not necessarily, drivelines assembly 1 comprises a pumping system 8, which is adapted to suck oil from oil sump 3 and to direct it to the mechanical components of driveline 2 to be lubricated.

The operation of driveline assembly 1 and work vehicle 10 according to the present invention is described in the following.

In use, the oil of driveline assembly 1 is contained in part in oil sump 3 and in part in oil reservoir 4.

During operation, driveline 2 transmits motion from motor means 13 to wheels 12 and the mechanical components of driveline 2 are lubricated by oil splashing and pumping system **8.** In particular, at least some of the mechanical components of driveline 2 are partially immersed in the oil contained in oil sump 3 and lubricate the contact surfaces thereof by virtue of their movements. At the same time, pumping system 8 sucks oil from oil sump 3 and sprays it towards the mechanical components of driveline 2.

At the same time, pump 52 sucks oil from oil sump 3 and delivers it to remote valve 20. Remote valve 20, in turn, delivers the sucked oil to implement 50. In detail, oil flows from pump 52 to remote valve 20 through stretch 24a and from remote valve 20 to implement 50 through stretch 24b.

After actuating implement 50, the oil flows back to remote valve 20 through stretch 24c and then towards oil reservoir 4 through duct 7.

During operation, oil flows from oil reservoir 4 to oil sump 3 and vice versa through orifice 74.

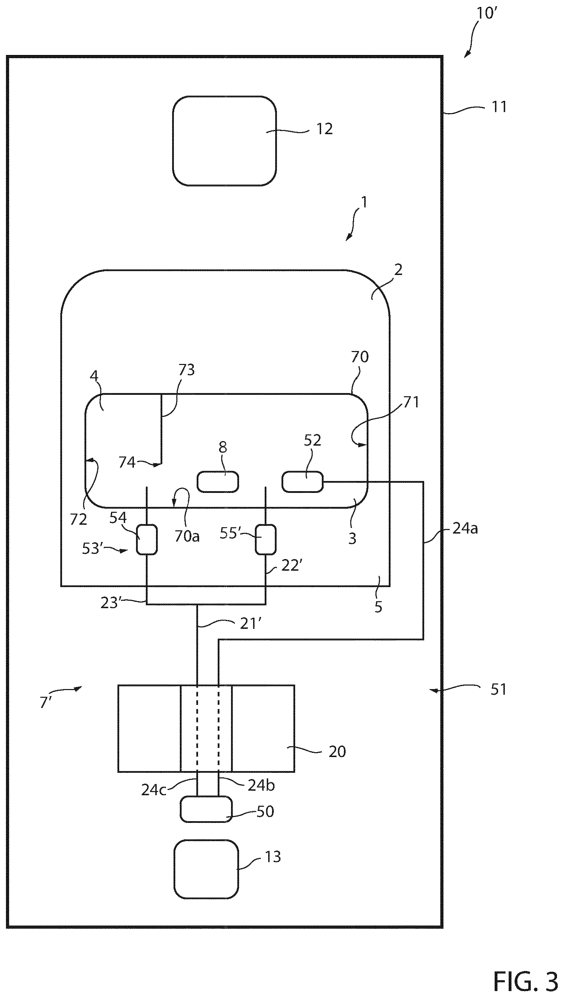

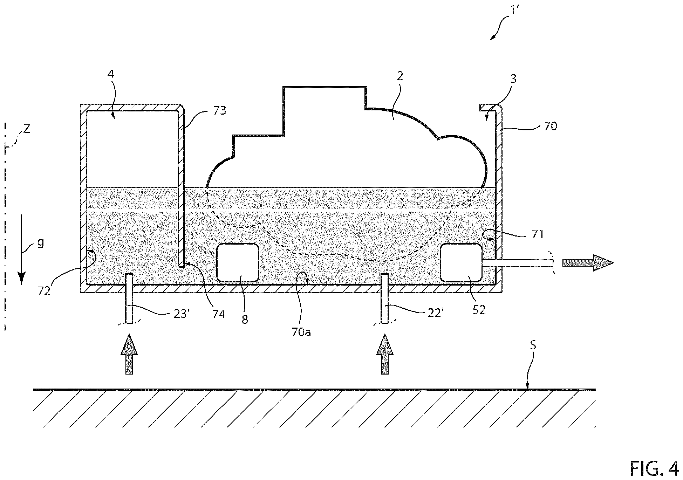

With reference to Figures 3 and 4, 10' denotes a work vehicle according to a second embodiment of the present invention. Work vehicle 10' is similar to work vehicle 10 and will be described hereinafter only insofar as it differs from the latter; equal or equivalent parts of work vehicles 10; 10' will be marked, where possible, by the same reference numerals.

Work vehicle 10' differs from work vehicle 10 in that duct 7 comprises a stretch 21' extending from remote valve 20, a stretch 22' directly fluidly connecting stretch 21' to oil sump 3 and a stretch 23' directly fluidly connecting stretch 21' to oil reservoir 4.

In detail, stretches 21', 22' and 23' are jointed with one another by a T-connection or a three-way fitting.

According to a not-shown embodiment, driveline assembly 1 comprises valve means adapted to control the flow of oil between stretch 21' and oil sump 3 and/or between stretch 21' and oil reservoir 4. In particular, the valve means are arranged at duct 7 and comprise a hydraulically actuated valve or an electro-hydraulically actuated valve.

In detail, the valve means are adapted to control the flow of oil such that the flow rate of oil flowing between stretch 21' and oil reservoir 4 is greater than the flow rate of oil flowing between stretch 21' and oil sump 3. In further detail, the valve means may be adapted to completely deny the fluidic communication between stretch 21' and oil sump 3 and allow the fluidic communication between stretch 21' and oil reservoir 4.

Preferably, actuation circuit 51 comprises deaeration means 53' adapted to remove oxygen and other dissolved gases from the oil flowing through it. In detail, actuation circuit 51 comprises a deaerator 55' at stretch 22' and/or a deaerator 54 at stretch 23'.

The operation of driveline assembly 1' and work vehicle 10' according to the present invention is described in the following.

In use, the oil of driveline assembly 1' is contained in part in oil sump 3 and in part in oil reservoir 4.

During operation, driveline 2 transmits motion from motor means 13 to wheels 12 and the mechanical components of driveline 2 are lubricated by oil splashing and pumping system 8. In particular, at least some of the mechanical components of driveline 2 are partially immersed in the oil contained in oil sump 3 and lubricate the contact surfaces thereof by virtue of their movements. At the same time, pumping system 8 sucks oil from oil sump 3 and sprays it towards the mechanical components of driveline 2.

At the same time, pump 52 sucks oil from oil sump 3 and delivers it to remote valve 20. Remote valve 20, in turn, delivers the sucked oil towards implement 50. After actuating implement 50, the oil flows towards oil sump 3 through stretch 22' and oil reservoir 4 through stretch 23'.

In the not-shown embodiment comprising the valve means, valve means control the flow of oil flowing between stretch 21' and oil sump 3 and/or between stretch 21' and oil reservoir 4.

During operation, oil flows from oil reservoir 4 to oil sump 3 and vice versa through orifice 74.

In view of the foregoing, the advantages of driveline assembly 1; 1' and work vehicle 10; 10' according to the invention are apparent.

In particular, since driveline assembly 1; 1' comprises oil reservoir 4, which is fluidly connected to oil sump 3, integral and adjacent to oil sump 3, the oil capacity of driveline assembly 1 is increased without causing an increase in power losses.

Since duct 7 of driveline assembly 1 directly fluidly connects remote valve 20 to oil reservoir 4, the velocity of the flow coming from remote valve 20 and directed to oil sump 3 can be reduced. As a result, turbulence and aeration of the oil is limited. In particular, oil reservoir 4 allows the oil to stagnate and to be deareated. Deaeration is enhanced also by deaerator means 53.

For the same reason as above, the suction capability of pumping system 8 is increased.

It is clear that modifications can be made to driveline assembly 1; 1' and work vehicle 10; 10' which do not extend beyond the scope of protection defined by the claims.

In particular, work vehicle 10; 10' might comprise tracks instead of wheels 12.

Body 70 might comprise more than one septum 73 and each septum 73 might comprise more than one opening 74.

Work vehicle 10; 10' might comprise more than one implement 50 and more than one actuation circuits 51.

## Claims

1. Work vehicle (10; 10') comprising:
- a main body (11);
- locomotion means (12) adapted to move said main body (11) with respect to a reference system;
- motor means (13) adapted to drive said locomotion means (12); and
- a driveline assembly (1; 1') comprising:
- a driveline (2) comprising a plurality of mechanical components adapted to operatively connect, in use, motor means (13) of said work vehicle (10; 10') to locomotion means (12) of said work vehicle (10; 10');
- an oil sump (3) adapted to collect an oil lubricating, in use, said driveline (2);
- an oil reservoir (4) adapted to contain said oil;
wherein said oil reservoir (4) and said oil sump (3) are integral and adjacent to each other, and fluidly connected to each other;
said work vehicle (10; 10') further comprising:
- at least one implement (50), which is hydraulically operable;
- an actuation circuit (51) for the actuation of said implement (50);
said actuation circuit (51) comprising:
- a pump (52) adapted to suck said oil from said oil sump (3);
- a remote valve (20) fluidly connected to said pump (52) and said implement (50);
- a duct (7; 7') fluidly connecting said remote valve (20) to said driveline assembly (1);
said pump (52) being adapted to deliver, in use, said oil sucked from said oil sump (3) to said remote valve (20); and wherein
said duct (7') comprises:
- a first stretch (21') extending from said remote valve (20);
- a second stretch (23') directly fluidly connecting said first stretch (21') to said oil reservoir (4); and
- a third stretch (22') directly fluidly connecting said first stretch (21') to said oil sump (3);
said work vehicle (10; 10') further comprises valve means adapted to control the flow of oil between said first stretch (21') and said oil sump (3) and/or between said first stretch (21') and said oil reservoir (4);
wherein said valve means are adapted to control the flow of oil such that the flow rate of said oil flowing, in use, between said first stretch (21') and said oil reservoir (4) is greater than the flow rate of said oil flowing, in use, between said first stretch (21') and said oil sump (3).

2. Work vehicle (10; 10') according to claim 1, wherein said mechanical components of said driveline (2) are spaced away from the oil contained, in use, in said oil reservoir (4).

3. Work vehicle (10; 10') according to claim 1 or 2, wherein said oil reservoir (4) is spaced away from a projection of said mechanical components of said driveline (2) onto a plane perpendicular to acceleration vector (g).

4. Work vehicle (10; 10') according to any one of the foregoing claims, further comprising a body (70);
said body (70) comprises, in turn:
- a first volume (71);
- a second volume (72); and
- at least one septum (73) adapted to delimit said first volume (71) from said second volume (72);
wherein said first volume (71) comprises and/or defines said oil sump (3) and said second volume (72) comprises and/or defines said oil reservoir (4).

5. Work vehicle (10; 10') according to claim 4, further comprising a container (5), which encloses at least in part said driveline (2) and said body (70) or being defined at least in part by said body (70).

6. Work vehicle (10; 10') according to any one of the foregoing claims, comprising a pumping system (8) adapted to suck said oil from said oil sump (3) and to direct it, in use, to said driveline (2) to lubricate it.

7. Work vehicle according to any of the foregoing claims, wherein said duct (7) directly fluidly connects said remote valve (20) to said oil reservoir (4).

8. Work vehicle according to any of the foregoing claims, wherein said valve means comprise a hydraulically actuated valve or an electro-hydraulically actuated valve.

9. Work vehicle according to any of the foregoing claims, wherein said actuation circuit (51) comprises deaeration means (53);
said deaeration means (53) comprising a deaerator (54) at said duct (7).

10. Work vehicle according to any of the foregoing claims, wherein said actuation circuit (51) comprises deaeration means (53'); said deaeration means (53') comprising a deaerator (54) at said second stretch (22') and a deaerator (55) at said third stretch (23').

## Patentansprüche

1. Arbeitsfahrzeug (10; 10') umfassend:
- einen Hauptkörper (11);
- Fortbewegungsmittel (12), die dazu eingerichtet sind, den Hauptkörper (11) relativ zu einem Bezugssystem zu bewegen;
- Motormittel (13), die dazu eingerichtet sind, die Fortbewegungsmittel (12) anzutreiben; und
- eine Antriebsstranganordnung (1; 1') umfassend:
- einen Antriebsstrang (2), der eine Mehrzahl mechanischer Komponenten umfasst, die dazu eingerichtet sind, im Gebrauch die Motormittel (13) des Arbeitsfahrzeugs (10; 10') mit den Fortbewegungsmitteln (12) des Arbeitsfahrzeugs (10; 10') wirkend zu verbinden;
- eine Ölwanne (3), die dazu eingerichtet ist, ein im Gebrauch den Antriebsstrang (2) schmierendes Öl zu sammeln;
- einen Öltank (4), der dazu eingerichtet ist, das Öl aufzunehmen;
wobei der Öltank (4) und die Ölwanne (3) integral und benachbart zueinander sowie fluidisch miteinander verbunden sind;
wobei das Arbeitsfahrzeug (10; 10') weiterhin umfasst:
- mindestens ein Arbeitsgerät (50), das hydraulisch betätigbar ist;
- einen Betätigungskreis (51) zur Betätigung des Arbeitsgeräts (50);
wobei der Betätigungskreis (51) umfasst:
- eine Pumpe (52), die dazu eingerichtet ist, das Öl aus der Ölwanne (3) anzusaugen;
- ein Fernventil (20), das fluidisch mit der Pumpe (52) und dem Arbeitsgerät (50) verbunden ist;
- einen Kanal (7; 7'), der das Fernventil (20) fluidisch mit der Antriebsstranganordnung (1) verbindet;
wobei die Pumpe (52) dazu eingerichtet ist, im Gebrauch das aus der Ölwanne (3) angesaugte Öl zu dem Fernventil (20) zu fördern; und wobei der Kanal (7') umfasst:
- einen ersten Abschnitt (21'), der sich von dem Fernventil (20) aus erstreckt;
- einen zweiten Abschnitt (23'), der den ersten Abschnitt (21') direkt fluidisch mit dem Öltank (4) verbindet; und
- einen dritten Abschnitt (22'), der den ersten Abschnitt (21') direkt fluidisch mit der Ölwanne (3) verbindet;
wobei das Arbeitsfahrzeug (10; 10') weiterhin Ventilmittel umfasst, die dazu eingerichtet sind, den Ölfluss zwischen dem ersten Abschnitt (21') und der Ölwanne (3) und/oder zwischen dem ersten Abschnitt (21') und dem Öltank (4) zu steuern;
wobei die Ventilmittel dazu eingerichtet sind, den Ölfluss derart zu steuern, dass die Durchflussrate des im Gebrauch zwischen dem ersten Abschnitt (21') und dem Öltank (4) fließenden Öls größer ist als die Durchflussrate des im Gebrauch zwischen dem ersten Abschnitt (21') und der Ölwanne (3) fließenden Öls.

2. Arbeitsfahrzeug (10; 10') nach Anspruch 1, wobei die mechanischen Komponenten des Antriebsstrangs (2) von dem im Gebrauch im Öltank (4) enthaltenen Öl beabstandet sind.

3. Arbeitsfahrzeug (10; 10') nach Anspruch 1 oder 2, wobei der Öltank (4) von einer Projektion der mechanischen Komponenten des Antriebsstrangs (2) auf eine Ebene senkrecht zum Beschleunigungsvektor (g) beabstandet ist.

4. Arbeitsfahrzeug (10; 10') nach einem der vorhergehenden Ansprüche, weiterhin umfassend einen Körper (70);
wobei der Körper (70) wiederum umfasst:
- ein erstes Volumen (71);
- ein zweites Volumen (72); und
- mindestens eine Trennwand (73), die dazu eingerichtet ist, das erste Volumen (71) vom zweiten Volumen (72) abzugrenzen;
wobei das erste Volumen (71) die Ölwanne (3) umfasst und/oder definiert und das zweite Volumen (72) den Öltank (4) umfasst und/oder definiert.

5. Arbeitsfahrzeug (10; 10') nach Anspruch 4, weiterhin umfassend einen Behälter (5), der zumindest teilweise den Antriebsstrang (2) und den Körper (70) umgibt oder zumindest teilweise durch den Körper (70) definiert ist.

6. Arbeitsfahrzeug (10; 10') nach einem der vorhergehenden Ansprüche, umfassend ein Pumpsystem (8), das dazu eingerichtet ist, das Öl aus der Ölwanne (3) anzusaugen und es im Gebrauch dem Antriebsstrang (2) zur Schmierung zuzuführen.

7. Arbeitsfahrzeug nach einem der vorhergehenden Ansprüche, wobei der Kanal (7) das Fernventil (20) direkt fluidisch mit dem Öltank (4) verbindet.

8. Arbeitsfahrzeug nach einem der vorhergehenden Ansprüche, wobei die Ventilmittel ein hydraulisch betätigtes Ventil oder ein elektrohydraulisch betätigtes Ventil umfassen.

9. Arbeitsfahrzeug nach einem der vorhergehenden Ansprüche, wobei der Betätigungskreis (51) Entlüftungsmittel (53) umfasst;
wobei die Entlüftungsmittel (53) einen Entlüfter (54) in dem Kanal (7) umfassen.

10. Arbeitsfahrzeug nach einem der vorhergehenden Ansprüche, wobei der Betätigungskreis (51) Entlüftungsmittel (53') umfasst; wobei die Entlüftungsmittel (53') einen Entlüfter (54) in dem zweiten Abschnitt (22') und einen Entlüfter (55) in dem dritten Abschnitt (23') umfassen.

## Revendications

1. Véhicule de travail (10 ; 10') comprenant :
- un corps principal (11) ;
- des moyens de déplacement (12) adaptés pour déplacer ledit corps principal (11) par rapport à un système de référence ;
- des moyens moteurs (13) adaptés pour entraîner lesdits moyens de déplacement (12) ; et
- un assemblage d'arbres de transmission (1 ; 1') comprenant :
- une ligne d'arbres de transmission (2) comprenant une série de composants mécaniques adaptés pour raccorder fonctionnellement, en utilisation, les moyens moteurs (13) dudit véhicule de travail (10 ; 10') aux moyens de déplacement (12) dudit véhicule de travail (10 ; 10') ;
- un carter d'huile (3) adapté pour recueillir une huile lubrifiant, en utilisation, ladite ligne d'arbres de transmission (2) ;
- un réservoir d'huile (4) adapté pour contenir ladite huile ;
où ledit réservoir d'huile (4) et ledit carter d'huile (3) sont mutuellement intégrés et adjacents l'un à l'autre, ainsi que raccordés fluidiquement l'un à l'autre ;
ledit véhicule de travail (10 ; 10') comprenant en outre :
- au moins un outil (50) à commande hydraulique ;
- un circuit d'actionnement (51) pour l'actionnement dudit outil (50) ;
ledit circuit d'actionnement (51) comprenant :
- une pompe (52) adaptée pour aspirer ladite huile à partir dudit carter d'huile (3) ;
- une vanne à distance (20) raccordée fluidiquement à ladite pompe (52) et audit outil (50) ;
- un conduit (7 ; 7') raccordant fluidiquement ladite vanne à distance (20) audit assemblage d'arbres de transmission (1) ;
ladite pompe (52) étant adaptée pour fournir, en utilisation, ladite huile aspirée à partir de ladite pompe à huile (3) à ladite vanne à distance (20) ; où ledit conduit (7') comprend :
- un premier allongement (21') s'étendant à partir de ladite vanne à distance (20) ;
- un deuxième allongement (23') raccordant fluidiquement de manière directe ledit premier allongement (21') audit réservoir d'huile (4) ; et
un troisième allongement (22') raccordant fluidiquement de manière directe ledit premier allongement (21') audit carter d'huile (3) ;
ledit véhicule de travail (10 ; 10') comprend en outre des moyens de régulation adaptés pour contrôler le flux d'huile entre ledit premier allongement (21') et ledit carter d'huile (3) et/ou entre ledit premier allongement (21') et ledit réservoir d'huile (4) ;
où lesdits moyens de régulation sont adaptés pour contrôler le flux d'huile de sorte que le débit de ladite huile s'écoulant, en utilisation, entre ledit premier allongement (21') et ledit réservoir d'huile (4) est supérieur au débit de ladite huile s'écoulant, en utilisation, entre ledit premier allongement (21') et ledit carter d'huile (3).

2. Véhicule de travail (10 ; 10') selon la revendication 1, dans lequel lesdits composants mécaniques de ladite ligne d'arbres de transmission (2) sont espacés de l'huile contenue, en utilisation, dans ledit réservoir d'huile (4).

3. Véhicule de travail (10 ; 10') selon la revendication 1 ou 2, dans lequel ledit réservoir d'huile (4) est espacé d'une projection desdits composants mécaniques de ladite ligne d'arbres de transmission (2) sur un plan perpendiculaire au vecteur d'accélération (g).

4. Véhicule de travail (10 ; 10') selon une quelconque revendication parmi celles qui précèdent, comprenant en outre un corps (70) ; ledit corps (70) comprend à son tour :
- un premier volume (71) ;
- un deuxième volume (72) ; et
- au moins un septum (73) adapté pour délimiter ledit premier volume (71) par rapport audit second volume (72) ;
dans lequel ledit premier volume (71) comprend et/ou définit ledit carter d'huile (3) et ledit second volume (72) comprend et/ou définit ledit réservoir d'huile (4).

5. Véhicule de travail (10 ; 10') selon la revendication 4, comprenant en outre un conteneur (5) qui renferme au moins en partie ladite ligne d'arbres de transmission (2) et ledit corps (70) ou qui est défini au moins en partie par ledit corps (70).

6. Véhicule de travail (10 ; 10') selon une quelconque revendication parmi celles qui précèdent, comprenant un système de pompage (8) adapté pour aspirer ladite huile à partir dudit carter d'huile (3) et la diriger, en utilisation, vers ladite ligne d'arbres de transmission (2) pour la lubrifier.

7. Véhicule de travail selon une quelconque revendication parmi celles qui précèdent, dans lequel ledit conduit (7) relie fluidiquement de manière directe ladite valve à distance (20) audit réservoir d'huile (4).

8. Véhicule de travail selon une quelconque revendication parmi celles qui précèdent, dans lequel lesdits moyens de régulation comprennent une vanne à actionnement hydraulique ou une soupape à actionnement électrohydraulique.

9. Véhicule de travail selon une quelconque revendication parmi celles qui précèdent, dans lequel ledit circuit d'actionnement (51) comprend des moyens de désaération (53) ;
lesdits moyens de désaération (53) comprennent un désaérateur (54) au niveau dudit conduit (7).

10. Véhicule de travail selon une quelconque revendication parmi celles qui précèdent, dans lequel ledit circuit d'actionnement (51) comprend des moyens de désaération (53') ; lesdits moyens de désaération (53') comprenant un désaérateur (54) au niveau dudit deuxième allongement (22') et un désaérateur (55) au niveau dudit troisième allongement (23').
